# FASCICULE DE BREVET EUROPEEN

(11) **EP 0 833 107 B1**
(45) Date de publication et mention de la délivrance du brevet: **18.06.2003**
(21) Numéro de dépôt: 97402226.1
(22) Date de dépôt: 25.09.1997
(51) Int. Cl.: F23R 3/14

(54) **Système d'injection aérodynamique d'un mélange air carburant**
Aerodynamisches Einspritzsystem zur Einspritzung eines Brennstoff-Luft-Gemisches
Aerodynamic fuel-air mixture injection device

(30) Priorité: 26.09.1996 FR 9611702
(43) Date de publication de la demande: 01.04.1998
(73) Titulaire: SNECMA MOTEURS, 75015 Paris (FR)
(72) Inventeur: Bensaadi, Mehdi, 92400 Courbevoie (FR); Schroer, Pierre, Marie, Victor, Emile, 91800 Brunoy (FR); Desaulty, Michel, André, Albert, 77240 Vert St Denis (FR); Pitrou, Sébastien, Pierre, Jean, 75020 Paris (FR)
(74) Mandataire: Berrou, Paul

(56) Documents cités:
- EP-A- 0 636 835
- FR-A- 2 369 418
- FR-A- 2 626 043
- FR-A- 2 665 729
- US-A- 3 703 259

## Description

L'invention concerne un système d'injection d'un mélange air carburant dans un foyer de combustion d'un moteur de turbine à gaz, comme décrit dans FR 2 626 043 A.

Elle concerne plus précisément un système d'injection aérodynamique comportant un injecteur de carburant à double débit destiné à injecter un débit primaire de carburant délivré par un circuit primaire de carburant, à tous les régimes du moteur, et un débit secondaire de carburant délivré par un circuit secondaire de carburant au delà d'un régime prédéterminé du moteur, et un bol aérodynamique évasé vers l'aval et comportant en amont un venturi disposé coaxialement à l'axe de l'injecteur de carburant, ce venturi séparant un flux interne d'air délivré par une vrille primaire et un flux externe d'air délivré par une vrille secondaire, le débit primaire et le débit secondaire de carburant étant injectés dans le flux interne d'air sous la forme de cônes de carburant.

Cet injecteur aérodynamique à double débit équipe notamment les turboréacteurs et fonctionne avec un débit primaire de carburant jusqu'à un certain régime du moteur, et au delà, un débit secondaire de carburant vient compléter le débit primaire.

Dans les injecteurs actuels de ce type, les cônes de sortie des deux débits de carburant viennent percuter la paroi interne du venturi.

Cette rencontre du carburant sur le venturi fait naître deux phénomènes :
- le premier phénomène concerne la pulvérisation secondaire du carburant, car une partie du carburant qui percute le venturi va y ruisseler, être réinjecté et repulvérisé à la sortie de ce venturi dans les conditions définies par la définition aérodynamique de cette zone de sortie. Ces effets se traduisent habituellement par une augmentation de l'angle du cône de carburant à la sortie du venturi.
- le second phénomène concerne le granulométrie du carburant à la sortie du bol aérodynamique. Cette granulométrie peut être dégradée par rapport à la capacité propre d'atomisation de l'injecteur de carburant.

L'augmentation de l'angle du cône de carburant au régime de ralenti, lorsque le circuit primaire de carburant est seul en action, entraîne une projection de carburant non vaporisé sur les parois de la zone primaire de la chambre de combustion. Le dispositif de refroidissement des parois de la chambre tend à figer la réaction de combustion dans la zone concernée ce qui provoque la formation de quantités importantes de monoxydes de carbone (CO) et d'hydrocarbures imbrûlés (CH_{X}).

Le but de l'invention est d'optimiser les systèmes d'injection aérodynamiques décrits ci-dessus de telle façon que l'on réduise au mieux les émissions de monoxydes de carbone et d'hydrocarbures imbrûlés aux bas régimes.

L'invention atteint son but par le fait que la longueur de venturi ainsi que sa forme sont adaptées pour que le cône de carburant provenant du circuit primaire de carburant ne rencontre pas le venturi.

Cette disposition conserve les qualités de pulvérisation de l'injecteur aux bas régimes, ce qui favorise la stabilité de combustion. En outre, les performances intrinsèques du système d'injection aux forts régimes ne sont pas modifiées, car le cône de carburant fourni par le circuit secondaire de carburant frappe le venturi, afin de disposer d'un cône de carburant relativement large au régime de plein gaz, ce qui permet de respecter les exigences de mélange et d'homogénéisation entre les injecteurs de carburant.

Les avantageuses caractéristiques suivantes sont en outre adoptées :
- Le rapport entre les vitesses des écoulements d'air des vrilles primaire et secondaire est inférieur à 1, 3 ;
- la vrille primaire est calée à une valeur comprise entre 55° et 65° ;
- la vrille secondaire est calée à une valeur comprise entre 60° et 70° ;
- le rapport des débits d'air entre la vrille primaire et la vrille secondaire est compris entre 1,1 et 1,2;
- le rapport entre la longueur axiale de la partie divergente du venturi et le diamètre du col du venturi est compris entre 0,3 et 0,4 ;

D'autres avantages et caractéristiques de l'invention ressortiront à la lecture de la description suivante faite à titre d'exemple et en référence aux dessins annexés dans lesquels :

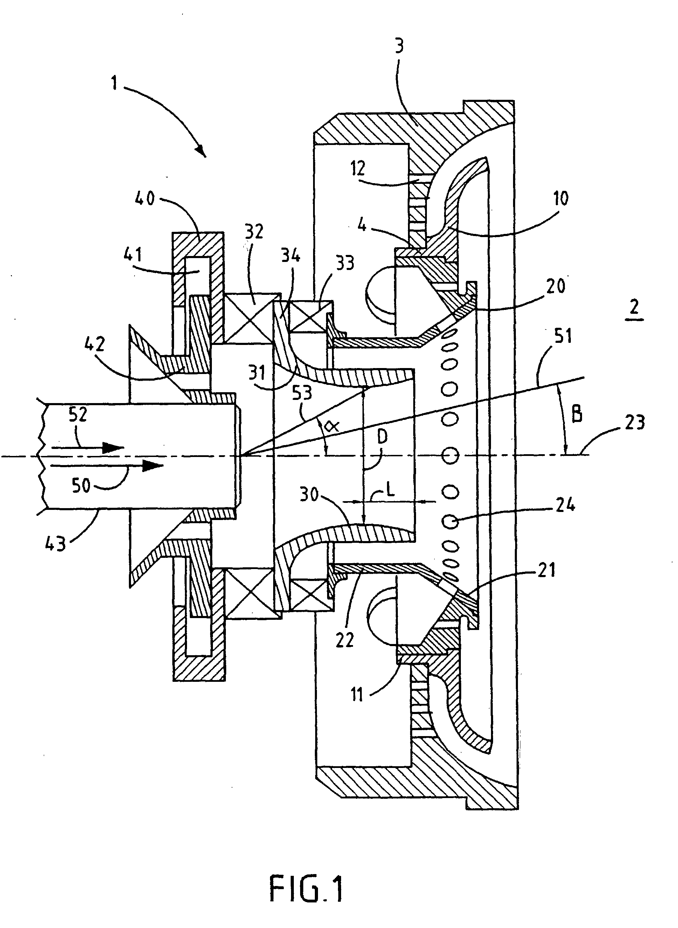

la figure 1 montre en coupe un système d'injection d'air et de carburant selon l'invention monté dans le fond de chambre d'une enceinte de combustion ;
la figure 2 montre la répartition spatiale du carburant par rapport à la distance à l'axe du bol selon que le circuit primaire de carburant est seul en fonctionnement ou fonctionne avec le circuit secondaire de carburant.

Le dessin montre un système d'injection 1 d'un mélange au carburant dans le foyer d'une enceinte de combustion 2 d'un moteur de turbine à gaz utilisé dans un turboréacteur par exemple. L'enceinte de combustion 2 est du type annulaire par exemple et est délimitée par deux chemises annulaires, non montrées sur le dessin, espacées radialement par rapport à l'axe du turboréacteur, et reliées en amont par un fond de chambre annulaire 3. Le fond de chambre 3 comporte une pluralité d'ouvertures 4 régulièrement espacées circulairement autour de l'axe du turboréacteur. Dans chacun des ouvertures 4 est monté un dispositif d'injection 1 conforme à l'invention. Les gaz de combustion s'écoulent vers l'aval dans l'enceinte de combustion 2 et alimentent ensuite une turbine à haute pression qui entraîne un compresseur à haute pression disposé en amont du fond de chambre 3. Ce compresseur alimente en air les dispositifs d'injection 1, et deux espaces annulaires disposés radialement respectivement à l'intérieur et à l'extérieur de l'enceinte de combustion 2.

L'air introduit dans l'enceinte de combustion 2 par les dispositifs d'injection 1 participe activement à la vaporisation du carburant, ainsi qu'à sa combustion dans la zone primaire du foyer de combustion, tandis que l'air circulant à l'extérieur des chemises, participe au refroidissement de ces dernières et pénètre dans l'enceinte de combustion 2 par des trous de dilution, afin de refroidir les gaz de combustion transmis à la turbine à haute pression.

Un déflecteur annulaire 10 est monté dans l'ouverture 4 au moyen d'un manchon interne 11. Ce déflecteur 10 est disposé dans l'enceinte de combustion 2 parallèlement au fond de chambre 3 et est refroidi par impact avec de l'air passant par des orifices 12 traversant le fond de chambre 3. A l'intérieur de manchon 11 est monté un bol aérodynamique 20 qui comporte une paroi 21 évasée vers l'aval dans le prolongement d'une paroi cylindrique 22 disposée coaxialement à l'axe 23 de l'ouverture 4. La paroi 21 comporte une pluralité de trous 24 d'introduction d'air dans le foyer de combustion.

La paroi cylindrique 22 entoure un venturi 30 d'axe 23 dont le contour interne 31 est de forme convergente divergente. Le venturi 30 délimite les écoulements d'air issu d'une vrille primaire 32 et d'une vrille secondaire 33.

La vrille primaire 32 de type radial est disposée en amont du venturi 30 et elle délivre un flux d'air interne à l'intérieur du venturi 30.

La vrille secondaire 33, également de type radial, est disposée en amont de la paroi cylindrique 22 du bol 20 et elle délivre un flux d'air externe dans des canaux ménagés entre le venturi 30 et la paroi cylindrique 22.

Le venturi 30 comporte à son extrémité amont un flasque radial 34 séparant la vrille primaire 32 et la vrille secondaire 33.

La vrille primaire 32 est solidaire en amont d'une pièce de retenue 40 qui présente une rainure annulaire 41 ouverte du côté de l'axe 23 de l'ouverture 4. Dans cette rainure annulaire 41 est montée une douille 42 de fixation de l'extrémité d'une canne de pulvérisation de carburant 43 d'un injecteur de carburant de type à double circuit de carburant. La douille 42 est déplaçable radialement dans la rainure annulaire 41 avec un certain degré afin de permettre un rattrapage de jeu par suite des contraintes thermiques auxquelles sont assujettis l'injecteur de carburant et les pièces fixées au fond de chambre 3.

L'injecteur de carburant comporte un circuit primaire de carburant 50 qui délivre un débit primaire de carburant 51 sous la forme d'un cône de carburant faisant un angle β avec l'axe 23, à tous les régimes du moteur, et un circuit secondaire de carburant 52 qui délivre un débit secondaire de carburant 53, sous la forme d'un cône de carburant faisant un angle α avec l'axe 23 au delà d'un régime donné du moteur ou d'un débit donné de carburant.

Selon la présente invention, la forme et les dimensions du venturi 30, ainsi que la position de l'extrémité de la canne de pulvérisation du carburant, et les angles α et β des cônes de carburant 53, 51 sont calculés de telle manière que le cône 53 du débit secondaire de carburant frappe toujours la paroi interne 31 du venturi 30, tandis que le cône 51 du débit primaire de carburant ne percute jamais la paroi interne 31 du venturi 30.

L'angle d'ouverture β du cône de carburant primaire 51 est relativement fermé, mais il doit toutefois être supérieur à un angle minimum d'ouverture pour obtenir des conditions satisfaisantes d'allumage du moteur, en fonction de la position du système d'allumage.

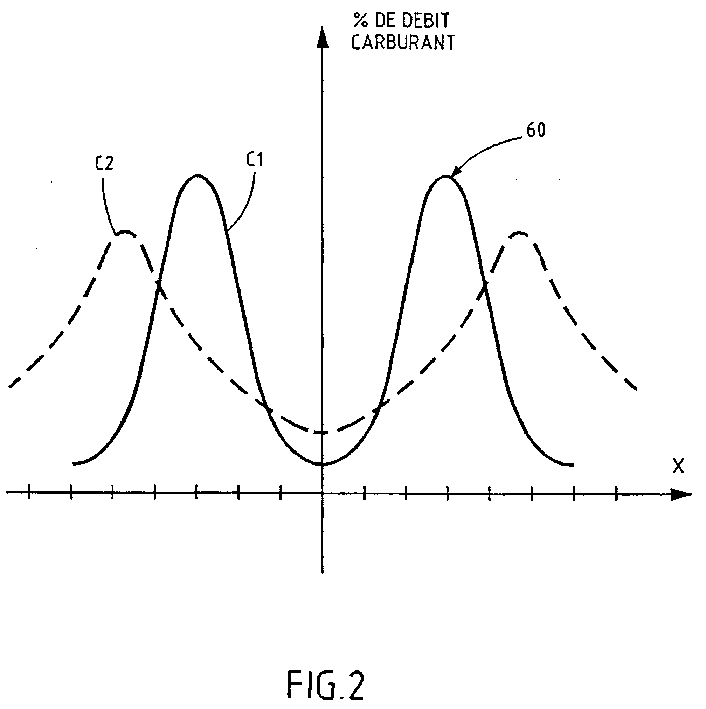

La disposition proposée entraîne une répartition spatiale du carburant à la sortie du bol 20 et dans la zone primaire de la chambre de combustion très différentes entre les deux modes de fonctionnement de l'injecteur de carburant. Sur la figure 2 on a représenté en traits pleins la courbe C1 montrant la répartition spatiale en fonction de la distance X à l'axe 23 du bol 20, lorsque seul le circuit primaire 50 de carburant est en fonctionnement, et en traits pointillés la courbe C2 montrant la même répartition spatiale lorsque le circuit primaire 50 et le circuit secondaire 52 délivrent ensemble du carburant. On constate que les zones 60, où la densité de carburant est maximum, s'éloignent vers l'extérieur du bol 20 lorsque les deux débits primaire et secondaire de carburant fonctionnent.

L'optimisation de la forme de bol 20 et du venturi 30 est effectuée par des calculs d'aérodynamique en deux et/ou trois dimensions en y associant la prise en compte des phénomènes diphasiques, tels que la fragmentation du carburant, la pulvérisation secondaire sur le venturi 30, le phénomène de vaporisation du carburant.

Le circuit primaire de carburant 50 de l'injecteur de carburant utilisé est de définition purement mécanique, c'est-à-dire que le carburant délivré par ce circuit primaire 50 n'est fragmenté que sous l'action de la pression d'injection du carburant.

Le carburant délivré par ce circuit primaire 50 ne frappe pas le venturi 30 et n'interfère pas sur le cône de carburant 53 du circuit secondaire de carburant, ce qui permet de réduire l'émission d'oxydes d'azote par rapport à l'état de la technique et de déplacer la zone de recirculation de l'air qui est à l'origine de la stabilité de la chambre de combustion. L'air qui alimente le bol 20 a une dynamique de sortie fortement dépendante du venturi 30. Ce sont les rapports de vitesse entre le flux d'air interne et le flux d'air externe, le calage de chacune des vrilles et la distance, à laquelle se confondent les deux flux d'air qui déterminent la position de la zone de recirculation en sortie du bol. Le carburant, notamment les fines gouttelettes prisonnières de ces zones d'air, va être consommé pour obtenir une flamme stabilisée, sans dépendre de la vitesse d'écoulement de l'air autour du bol. La trajectographie des gouttes de carburant est réalisée par calcul 2D avec diphasique.

De manière avantageuse, les caractéristiques suivantes sont adoptées :
- le rapport des vitesses des écoulements d'air des vrilles primaire 32 et secondaire 33 est inférieur à 1,3 ;
- la vrille primaire 32 est calée à une valeur comprise entre 55° et 65°, à 60° par exemple ;
- la vrille secondaire 33 est calée à une valeur comprise entre 60° et 70°, à 70° par exemple ;
- le rapport des débits d'air fournis par la vrille primaire 32 et par la vrille secondaire 33 est compris entre 1,1 et 1,2. Il est par exemple de 1,13 ;
- le rapport entre longueur axiale L de la partie divergente du venturi 30 et le diamètre D au col du venturi 30 est compris entre 0,3 et 0,4. Il est par exemple de 1/3.

## Revendications

1. Système d'injection aérodynamique d'un mélange air carburant dans un foyer de combustion (2) d'un moteur de turbine à gaz, ce système comportant un injecteur de carburant (43) à double débit destiné à injecter un débit primaire de carburant (51) délivré par un circuit primaire (50) à tous les régimes du moteur, et un débit secondaire de carburant (53) délivré par un circuit secondaire de carburant (52), au delà d'un régime prédéterminé du moteur, et un bol aérodynamique (20) évasé vers l'aval et comportant en amont un venturi (30) disposé coaxialement à l'axe (23) de l'injecteur de carburant (43), ce venturi (30) séparant un flux interne d'air délivré par une vrille primaire (32) et un flux externe d'air délivré par une vrille secondaire 33, **caractérisé par le fait que** le débit primaire (51) et le débit secondaire (53) de carburant étant injectés dans le flux interne d'air sous la forme de cônes de carburant, et la longueur du venturi, et sa forme sont adaptées pour que le cône de carburant (51) provenant du circuit primaire de carburant (50) ne rencontre pas le venturi (30).

2. System d'injection selon la revendication 1, **caractérisé par le fait que** le rapport entre les vitesses des écoulements d'air des vrilles primaire (32) et secondaire (33) est inférieur à 1,3.

3. System d'injection selon l'une des revendications 1 ou 2, **caractérisé par le fait que** les vrilles primaire (32) et secondaire (33) sont radiales.

4. System d'injection selon la revendication 3, **caractérisé par le fait que** la vrille primaire (32) est calée à une valeur comprise entre 55° et 65°.

5. System d'injection selon l'une des revendications 3 ou 4, **caractérisé par le fait que** la vrille secondaire (33) est calée à une valeur comprise entre 60° et 70°.

6. System d'injection selon l'une quelconque des revendications 1 à 5, **caractérisé par le fait que** le rapport des débits d'air fournis par la vrille primaire (32) et par la vrille secondaire (33) est compris entre 1,1 et 1,2.

7. System d'injection selon l'une quelconque des revendications 1 à 6, **caractérisé par le fait que** le rapport entre longueur axiale L de la partie divergente du venturi (30) et le diamètre (D) au col du venturi (30) est compris entre 0,3 et 0,4.

## Patentansprüche

1. Aerodynamisches Einspritzsystem zum Einspritzen eines Brennstoff-Luft-Gemischs in einen Verbrennungsraum (2) eines Gasturbotriebwerks, wobei dieses System eine Doppel-Brennstoff-Einspritzdüse (43) umfasst, die dazu bestimmt ist, eine Primärbrennstoffmenge (51) einzuspritzen, die in allen Leistungsbereichen des Triebwerks von einem Primärkreis (50) zugeführt wird, und eine Sekundärbrennstoffmenge (53) einzuspritzen, die über einer bestimmten Leistungsschwelle des Triebwerks von einem Sekundärkreis (52) zugeführt wird, sowie eine aerodynamische Schüssel (20) umfasst, die sich nach hinten erweitert und vorn ein Venturirohr (30) aufweist, das koaxial zur Achse (23) der Brennstoff-Einspritzdüse (43) angeordnet ist, wobei dieses Venturirohr (30) einen inneren Luftstrom, der von einer Primärschleife (32) abgegeben wird, und einen äußeren Luftstrom, der von einer Sekundärschleife (33) abgegeben wird, voneinander trennt,
**dadurch gekennzeichnet,**
**dass** die Primärbrennstoffmenge (51) und die Sekundärbrennstoffmenge (53) kegelförmig in den inneren Luftstrom eingespritzt werden, und dass die Länge des Venturirohrs und dessen Form dergestalt vorgesehen sind, dass der Brennstoffkegel (51) aus dem Primärbrennstoffkreis (50) nicht auf das Venturirohr (30) trifft.

2. Einspritzsystem nach Anspruch 1,
**dadurch gekennzeichnet,**
**dass** das Verhältnis zwischen den Geschwindigkeiten der Luftströme der Primärschleife (32) und der Sekundärschleife (33) unter 1,3 beträgt.

3. Einspritzsystem nach einem der Ansprüche 1 oder 2,
**dadurch gekennzeichnet,**
**dass** die Primärschleife (32) und Sekundärschleife (33) radial verlaufen.

4. Einspritzsystem nach Anspruch 3,
**dadurch gekennzeichnet,**
**dass** die Primärschleife (32) auf einen Wert festgestellt ist, der zwischen 55° und 65° beträgt.

5. Einspritzsystem nach einem der Ansprüche 3 oder 4,
**dadurch gekennzeichnet,**
**dass** die Sekundärschleife (33) auf einen Wert festgestellt ist, der zwischen 60° und 70° beträgt.

6. Einspritzsystem nach einem der Ansprüche 1 bis 5,
**dadurch gekennzeichnet,**
**dass** das Verhältnis der von der Primärschleife (32) und von der Sekundärschleife (33) abgegebenen Luftmengen zwischen 1,1 und 1,2 beträgt.

7. Einspritzsystem nach einem der Ansprüche 1 bis 6,
**dadurch gekennzeichnet,**
**dass** das Verhältnis zwischen axialer Länge L des divergierenden Teils des Venturirohrs (30) und Durchmesser (D) am Hals des Venturirohrs (30) zwischen 0,3 und 0,4 beträgt.

## Claims

1. Aerodynamic system for injecting an air-fuel mixture into a combustion space (2) of a gas turbine engine, the system comprising a double-delivery fuel injector (43) intended to inject a first delivery of fuel (51), delivered by a primary circuit (50) at all engine speeds, and a secondary fuel delivery (53) delivered by a secondary fuel circuit (52), above a predetermined engine speed, and an aerodynamic bowl (20) widening in the downstream direction and upstream comprising a venturi (30) arranged coaxially with respect to the axis (23) of the fuel injector (43), this venturi (30) separating an internal air stream delivered by a primary swirl inducer (32) and an external air stream delivered by a secondary swirl inducer (33), **characterized in that** the primary delivery (51) and the secondary delivery (53) of fuel are injected into the internal air stream in the form of cones of fuel and the length of the venturi and its shape are tailored so that the cone of fuel (51) from the primary fuel circuit (50) does not meet the venturi (30).

2. Injection system according to Claim 1, **characterized in that** the ratio between the speeds of the air flows from the primary (32) and secondary (33) swirl inducing devices is less than 1.3.

3. Injection system according to one of Claims 1 and 2, **characterized in that** the primary (32) and secondary (33) swirl inducers are radial.

4. Injection system according to Claim 3, **characterized in that** the primary swirl inducer (32) is set at a value of between 55° and 65°.

5. Injection system according to one of Claims 3 and 4, **characterized in that** the secondary swirl inducer (33) is set at a value of between 60° and 70°.

6. Injection system according to any one of Claims 1 to 5, **characterized in that** the ratio of the deliveries of air supplied by the primary swirl inducer (32) and by the secondary swirl inducer (33) is between 1.1 and 1.2.

7. Injection system according to any one of Claims 1 to 6, **characterized in that** the ratio between the axial length L of the divergent part of the venturi (30) and the diameter (D) of the throat of the venturi (30) is between 0.3 and 0.4.
